# EUROPÄISCHE PATENTANMELDUNG

(11) **EP 4 815 123 A1**
(43) Veröffentlichungstag der Anmeldung: **30.09.2026**
(21) Anmeldenummer: 26164506.3
(22) Anmeldetag: 13.03.2026
(51) Int. Cl.: H01M 50/103, H01M 50/15, H01M 50/209, H01M 50/342, H01M 50/367, H01M 50/392

(54) **ELEKTROCHEMISCHE EINZELZELLE UND ELEKTRISCHER ENERGIESPEICHER**

(30) Priorität: 26.03.2025 DE 102025001048
(71) Anmelder: Mercedes-Benz Group AG, 70372 Stuttgart (DE)
(72) Erfinder: RIEDLINGER, Stefan, 73230 Kirchheim (DE); FREIVOGEL, Mathias, 73337 Unterböhringen (DE); UZUN, Ahmet, 70186 Stuttgart (DE)
(74) Vertreter: Hospach, Tobias

(57) **Zusammenfassung**

Die Erfindung betrifft eine elektrochemische Einzelzelle (1) mit einem Zellgehäuse (2), in welchem ein elektrochemisch aktives Material (3) angeordnet ist und das Zellgehäuse (2) eine mit einer Berstmembran verschlossene Entlüftungsöffnung (E) aufweist, wobei die Berstmembran die Entlüftungsöffnung (E) bei Überschreiten eines vorgegebenen Innendruckes in dem Zellgehäuse (2) zumindest teilweise freigibt. Erfindungsgemäß ist vorgesehen, dass in einem Bereich unterhalb der Entlüftungsöffnung (E) innerhalb des Zellgehäuses (2) ein Gasführungsstrukturelement (4) zur gezielten Gasführung eines aus der Entlüftungsöffnung (E) austretenden Gases angeordnet ist.

Die Erfindung betrifft weiterhin einen elektrischen Energiespeicher mit einer Mehrzahl von elektrisch miteinander verschalteten Einzelzellen (1).

## Beschreibung

Die Erfindung betrifft eine elektrochemische Einzelzelle mit einem Zellgehäuse, in welchem ein elektrochemisch aktives Material angeordnet ist und das Zellgehäuse eine mit einer Berstmembran verschlossene Entlüftungsöffnung aufweist, wobei die Berstmembran die Entlüftungsöffnung bei Überschreiten eines vorgegebenen Innendruckes in dem Zellgehäuse zumindest teilweise freigibt. Weiterhin betrifft die Erfindung einen elektrischen Energiespeicher.

Aus der US 9,196,920 B2 ist eine elektrochemische Einzelzelle mit einem Zellbecher mit einer Seitenwand bekannt. Die Seitenwand ist mit einem ersten Ende des Zellbechers verbunden, wobei der Zellbecher eine Entlüftungsöffnung an dem ersten Ende aufweist. Die Entlüftungsöffnung ist konfiguriert, dass Gase und Abwässer aus dem Zellbecher austreten können, sobald der Druck in dem Zellbecher einen vorbestimmten Wert erreicht.

Der Erfindung liegt die Aufgabe zugrunde, eine elektrochemische Einzelzelle mit einem Zellgehäuse und einen elektrischen Energiespeicher anzugeben.

Die Aufgabe wird erfindungsgemäß gelöst durch eine elektrochemische Einzelzelle, welche die in Anspruch 1 angegebenen Merkmale aufweist, und durch einen elektrischen Energiespeicher, welcher die in Anspruch 10 angegebenen Merkmale aufweist.

Vorteilhafte Ausgestaltungen der Erfindung sind Gegenstand der Unteransprüche.

Eine elektrochemische Einzelzelle weist ein Zellgehäuse auf, in welchem ein elektrochemisch aktives Material angeordnet ist und das Zellgehäuse eine mit einer Berstmembran verschlossene Entlüftungsöffnung aufweist, wobei die Berstmembran die Entlüftungsöffnung bei Überschreiten eines vorgegebenen Innendruckes in dem Zellgehäuse zumindest teilweise freigibt. Erfindungsgemäß ist vorgesehen, dass in einem Bereich unterhalb der Entlüftungsöffnung innerhalb des Zellgehäuses ein Gasführungsstrukturelement zur gezielten Gasführung eines aus der Entlüftungsöffnung austretenden Gases angeordnet ist.

Mittels des in dem Bereich unterhalb der Entlüftungsöffnung angeordneten Gasführungsstrukturelementes wird ein Entlüftungsbereich der Einzelzelle freigehalten, so dass ein Gas ungehindert aus dem Zellgehäuse der Einzelzelle über die Entlüftungsöffnung entweichen kann, insbesondere im Fall eines thermischen Durchgehens der Einzelzelle. Darüber hinaus kann mittels des Gasführungsstrukturelementes im Wesentlichen ausgeschlossen werden, dass beispielsweise brennendes elektrochemisch aktives Material die Entlüftungsöffnung verschließt, dadurch eine Hitzeentwicklung innerhalb der Einzelzelle erhöht ist und somit ein Brandrisiko für benachbarte Einzelzellen bestehen kann. Insbesondere wird mittels des Gasführungsstrukturelementes erreicht, dass elektrochemisch aktives Material aus dem Zellgehäuse, aufgrund eines vergleichsweise hohen Innendruckes heraustransportiert, insbesondere geschleudert, wird.

Ein solches thermisches Durchgehen kann durch einen Kurzschluss innerhalb der Einzelzelle entstehen, wobei ein Kurzschlussstrom durch einen inneren Widerstand eine unmittelbare Umgebung einer Schadstelle, durch welche ein direkter Pfad von einer Kathode zu einer Anode entsteht und dadurch der Kurzschluss entstanden ist, aufheizen kann. Diese Aufheizung, das heißt die entstehende Wärmeenergie, innerhalb des Zellgehäuses weitet sich aus und verursacht noch mehr Wärme, woraus ein kontinuierlicher Temperaturanstieg resultiert. Steigt der Innendruck in dem Zellgehäuse derart an, dass der vorgegebene Innendruck überschritten ist, birst die Berstmembran und gibt die Entlüftungsöffnung frei, die Einzelzelle entlüftet, wobei giftige und brennbare Gase freigesetzt werden. Ist die thermisch durchgehende Einzelzelle Bestandteil eines elektrischen Energiespeichers mit einer Mehrzahl elektrisch verschalteter Einzelzellen besteht die Gefahr einer thermischen Propagation, die sich kaum bis gar nicht aufhalten lässt und eine Kaskadenreaktion beginnt. Das heißt, dass ein entstandener Brand sich von Einzelzelle zu Einzelzelle ausbreitet, insbesondere bis der gesamte elektrische Energiespeicher in Rauch und/oder Flammen aufgeht.

In einer Ausführung umfasst das Gasführungsstrukturelement zwei Ebenen, die übereinander angeordnet sind und parallel zu einer Gehäuseseite, in welche die Entlüftungsöffnung integriert ist, verlaufen. Dabei wird der sich über diese beiden Ebenen des Gasführungsstrukturelementes erstreckende Entlüftungsbereich der Einzelzelle mittels des Gasführungsstrukturelementes zur gezielten Entlüftung der Einzelzelle freigehalten.

In einer weiteren Ausführung ist eine Ebene des Gasführungsstrukturelementes als Stützelement zum Fixieren und Abstützen des elektrochemisch aktiven Materials innerhalb des Zellgehäuses und zur gerichteten Führung des Gases von einem Schmalseitenwandbereich in Richtung der Entlüftungsöffnung ausgebildet. Das heißt, dass elektrochemisch aktive Material, insbesondere eine Elektrodenfolienanordnung, mittels des Stützelementes in einer vorgegebenen Position fixiert ist, so dass weitestgehend vermieden werden kann, dass das elektrochemisch aktive Material die Entlüftungsöffnung blockiert und dadurch eine Explosionsgefahr der Einzelzelle verringert werden kann.

In einer möglichen Ausführung weist das Stützelement eine Anzahl von einem Mittelteil in Richtung der Seitenwandbereiche des Zellgehäuses abragende Stege auf, die mit einem dem Mittelteil gegenüberliegenden Ende eines jeweiligen Seitensteges einer als Gasführungselement ausgebildeten weiteren Ebene des Gasführungsstrukturelementes verbunden sind. Dabei sind die Stege derart angeordnet und zueinander beabstandet, dass im Wesentlichen ausgeschlossen werden kann, dass ein jeweiliger durch mittels der Beabstandung der Stege ausgebildeter freier Zwischenraum durch freigesetztes Aktivmaterial zugesetzt wird und dadurch eine Entlüftung der Einzelzelle blockiert ist. Je mehr Gas gezielt aus der Einzelzelle, insbesondere durch Freihaltung des Entlüftungsbereiches mittels des Gasführungsstrukturelementes, austreten kann, desto weniger Wärme wird auf gegebenenfalls benachbart angeordnete Einzelzellen übertragen. Darüber hinaus strömt das Gas mittels des Gasführungsstrukturelementes gerichtet aus der Entlüftungsöffnung, so dass ein Wärmeübertrag an benachbarte Einzelzellen verringert und dadurch ein Risiko einer thermischen Propagation verringert werden kann.

In einer Ausführung der elektrochemischen Einzelzelle ist das Gasführungselement des Gasführungsstrukturelementes zur Führung des Gases von dem Stützelement zur Entlüftungsöffnung ausgebildet. Insbesondere wird das Gas mittels des Gasführungselementes gezielt, ein elektrochemisch aktives Material entlang der Schmalseitenwandbereiche zu der Entlüftungsöffnung geführt, so dass das Gas über die Entlüftungsöffnung entweichen kann und somit ein Innendruck in dem Zellgehäuse verringert wird.

In einer Weiterbildung weist das Gasführungselement einen Mittelsteg zur Verringerung von Gasverwirbelungen bei einem Gasaustritt aus der Entlüftungsöffnung und zur Abstützung eines Ventinggitters sowie zwei gegenüberliegend angeordnete, an gegenüberliegenden Seitenwandbereichen des Zellgehäuses anliegende Seitenstege zur Gasführung und als jeweils nach außen dienender Hitzeschutz auf. Durch das Gasführungselement wird das Gas aktiv bis zur Entlüftungsöffnung gelenkt geführt, wobei das Gas aufgrund des Mittelsteges turbulenzarm gesteuert, also wenig bis gar nicht verwirbelt, nach außerhalb des Zellgehäuses geführt wird. Die Seitenstege sind insbesondere derart ausgebildet, dass diese sich bis zur Fixierung des elektrochemisch aktiven Materials erstrecken, wodurch der Entlüftungsbereich entsprechend groß ausgebildet ist. Dabei dienen die Seitenstege als Hitzeschutz, um insbesondere einen kritischen Bereich einer benachbarten Einzelzelle vor der von der thermisch durchgehenden Einzelzelle ausgehenden Hitzewirkung zu schützen.

In einer Ausführung ist an dem Gasführungsstrukturelement in zumindest einem Randbereich in Richtung einer Längsachse seitlich beabstandet zu dem Stützelement und dem Gasführungselement ein Gasleitelement zur Führung des Gases in Richtung der Entlüftungsöffnung angeordnet oder ausgebildet. Durch das Gasleitelement wird das das elektrochemisch aktive Material seitlich umströmende Gas in Richtung der Entlüftungsöffnung geführt. Insbesondere wird das Gas dabei mittig entlang von Stromableiterfahnen des elektrochemisch aktiven Materials zu der Entlüftungsöffnung geführt. Mittels des Gasleitelementes wird ein Strömungsweg für das Gas freigehalten, so dass eine Rissbildung in einer Seitenwand des Zellgehäuses weitestgehend vermieden werden kann und/oder ein Risiko für ein Absprengen einer Deckelbaugruppe des Zellgehäuses der Einzelzelle verringert werden kann.

In einer möglichen Ausführung weist das Gasleitelement eine Anzahl in Richtung der Entlüftungsöffnung verlaufende Leitstege auf, durch welche das Gas in Richtung der Entlüftungsöffnung, insbesondere zielgerichtet, geleitet wird.

In einer Ausführung weist das Gasleitelement vier Leitstege und drei zwischen diesen ausgebildete Leitkanäle auf, die in Richtung der Entlüftungsöffnung münden, um zu erreichen, dass das Gas ungehindert aus dem Zellgehäuse der Einzelzelle über die Entlüftungsöffnung entweichen kann.

In einer möglichen Ausführung sind die Leitstege derart positioniert, dass sich die Leitkanäle in Richtung der Entlüftungsöffnung erstrecken, um das Gas zielgerichtet der Entlüftungsöffnung des Zellgehäuses zuzuführen, so dass das Gas aus dem Zellgehäuse entweichen kann.

In einer weiteren möglichen Ausführung ist das Gasleitelement in einem dem elektrochemisch aktiven Material zugewandten Bereich abschnittsweise geschlossen, wodurch die Leitkanäle im Wesentlichen freigehalten werden können, um das Gas in Richtung der Entlüftungsöffnung zu leiten. Auch kann sich das elektrochemisch aktive Material an dem abschnittsweise geschlossenen Bereich des Gasleitelementes abstützen.

In einer Ausführung ist das Gasführungsstrukturelement aus einem Duroplast und/oder Polypropylen gebildet, so dass weitestgehend sichergestellt werden kann, dass eine mittels des Gasführungsstrukturelementes gebildete Schutzgeometrie unterhalb der Entlüftungsöffnung auch während eines thermischen Durchgehens der Einzelzelle erhalten bleibt. Ein Blockieren der Entlüftungsöffnung durch elektrochemisch aktives Material kann somit über eine gesamte Zeitdauer des thermischen Durchgehens mittels des Gasführungsstrukturelementes ausgeschlossen werden, so dass ein Ausgasen der Einzelzelle im Wesentlichen sichergestellt werden kann.

In einer weiteren möglichen Ausführung ist das Gasführungsstrukturelement an Fixierelementen zur Fixierung des elektrochemisch aktiven Materials und/oder an einer Innenfläche der Gehäuseseite des Zellgehäuses kraft- und/oder form- und/oder stoffschlüssig angeordnet. Mittels des zwischen dem elektrochemisch aktiven Material und der Gehäuseseite angeordneten Gasführungsstrukturelementes kann eine unzulässige Hochbewegung des elektrochemisch aktiven Materials während des thermischen Durchgehens der Einzelzelle weitestgehend ausgeschlossen werden, wodurch zudem ein Blockieren der Entlüftungsöffnung mittels des Gasführungsstrukturelementes verhindert werden kann.

In einer Ausführung ist das Zellgehäuse prismatisch ausgebildet, wobei die Entlüftungsöffnung insbesondere in eine in Richtung einer Hochachse nach oben zeigenden Gehäusewand angeordnet ist, so dass im Wesentlichen sichergestellt werden kann, dass ein Entlüftungsbereich außerhalb der Einzelzelle vorhanden ist.

Darüber hinaus betrifft die Erfindung einen elektrischen Energiespeicher mit einer Mehrzahl von elektrisch miteinander verschalteten Einzelzellen, wobei in dem Bereich unterhalb der Entlüftungsöffnung innerhalb des jeweiligen Zellgehäuses ein Gasführungsstrukturelement zur gezielten Gasführung in Bezug auf die Entlüftungsöffnung angeordnet ist.

Mittels des jeweiligen Gasführungsstrukturelementes kann das Risiko einer Brandausweitung von einer thermisch durchgehenden Einzelzelle auf eine benachbart angeordnete Einzelzelle dadurch verringert werden, dass eine in der thermisch durchgehenden Einzelzelle vorhandene thermisch aktive Restmasse des elektrochemisch aktiven Materials verringert ist, so dass eine Konduktion zu einer benachbart angeordneten Einzelzelle verringert ist.

Ausführungsbeispiele der Erfindung werden im Folgenden anhand von Zeichnungen näher erläutert.

Dabei zeigen:
- Fig. 1: schematisch eine perspektivische teiltransparente Ansicht eines Ausschnittes einer elektrochemischen Einzelzelle,
- Fig. 2: schematisch eine perspektivische Schnittdarstellung eines vergrößerten Ausschnittes der elektrochemischen Einzelzelle.
- Fig. 3: schematisch die perspektivische teiltransparente Ansicht gemäß Figur 1 mit gezielter Gasführung,
- Fig. 4: schematisch eine perspektivische Ansicht eines Gasführungsstrukturelementes in einer alternativen Ausführung,
- Fig. 5: schematisch eine weitere perspektivische Ansicht des Gasführungsstrukturelementes in der alternativen Ausführungsform und
- Fig. 6: schematisch eine perspektivische Ansicht eines Ausschnittes des Gasführungsstrukturelementes in der alternativen Ausführungsform.

Einander entsprechende Teile sind in allen Figuren mit den gleichen Bezugszeichen versehen.

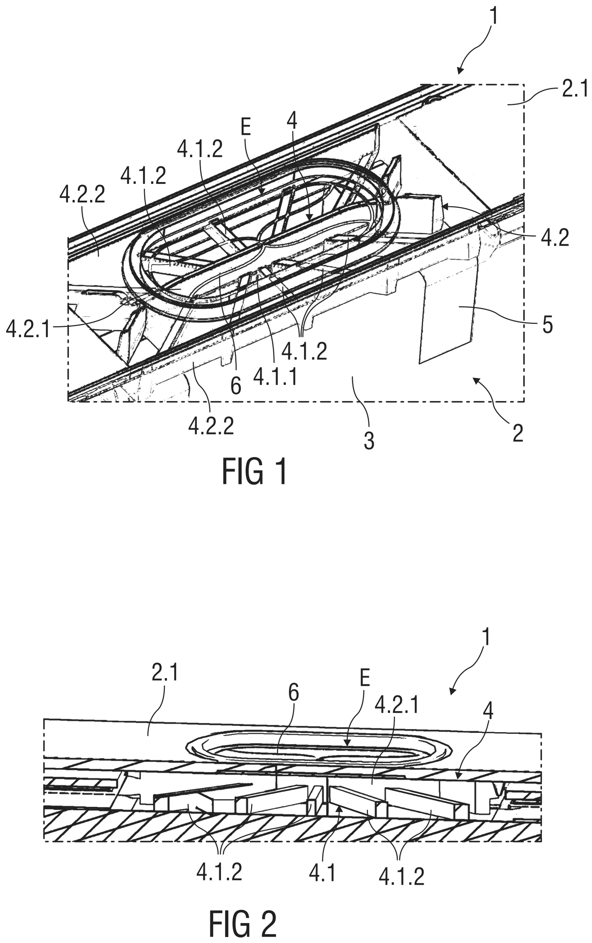

Figur 1 zeigt eine perspektivische teiltransparente Ansicht eines Ausschnittes einer elektrochemischen Einzelzelle 1 mit einem prismatischen Zellgehäuse 2, wobei in eine Gehäuseseite 2.1, welche insbesondere in Richtung einer Hochachse nach oben zeigt, eine Entlüftungsöffnung E integriert ist.

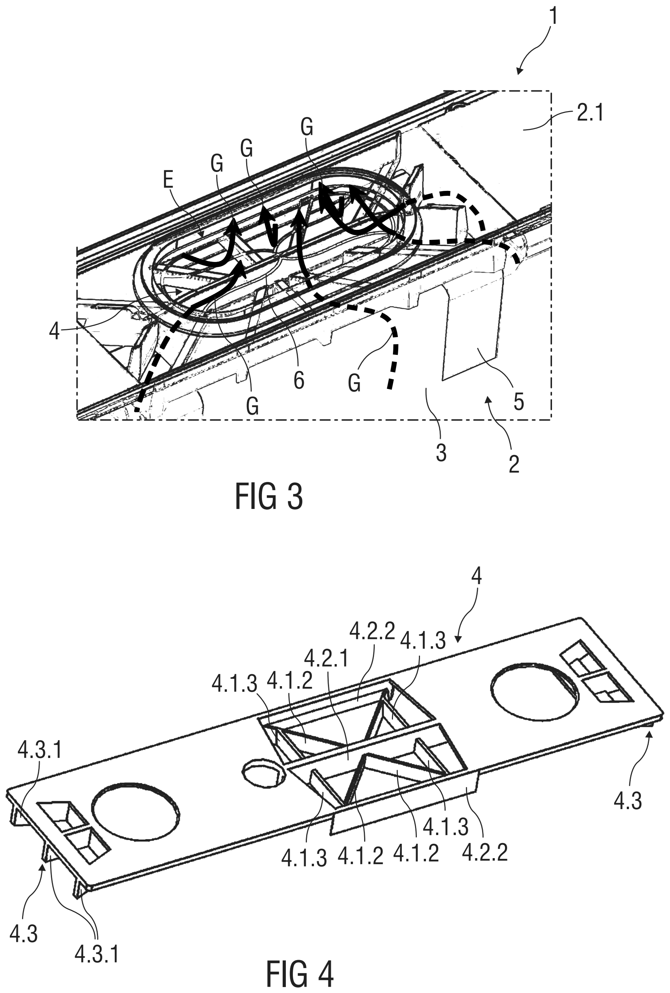

Figur 2 zeigt eine perspektivische Schnittdarstellung eines vergrößerten Ausschnittes der Einzelzelle 1, insbesondere im Bereich der Entlüftungsöffnung E und Figur 3 zeigt die perspektivische teiltransparente Ansicht gemäß Figur 1 mit zur Entlüftung gezielter Gasführung.

Die Entlüftungsöffnung E ist mittels einer nicht näher gezeigten Berstmembran verschlossen, welche, wenn ein Innendruck des Zellgehäuses 2 einen vorgegebenen Innendruck überschreitet, birst und somit die Entlüftungsöffnung E zur Entlüftung freigibt, insbesondere zur Ausgasung des Zellgehäuses 2. Dieser vorgegebene Innendruck wird insbesondere überschritten, wenn die Einzelzelle 1, insbesondere aufgrund eines Kurzschlusses, thermisch durchgeht.

In dem Zellgehäuse 2 ist ein elektrochemisch aktives Material 3, beispielsweise in Form einer Elektrodenfolienanordnung, angeordnet und mittels einer Anzahl von Fixierelementen innerhalb des Zellgehäuses 2 positioniert und fixiert.

Die Einzelzelle 1 kann, insbesondere bedingt durch einen Kurzschluss innerhalb der Einzelzelle 1, thermisch durchgehen, wobei ein solcher Kurzschluss durch eine Schadstelle des elektrochemisch aktiven Materials 3 entstehen kann. Durch die Schadstelle, beispielsweise aufgrund eines Fremdkörpers in dem Zellgehäuse 2, kann ein direkter Pfad von einer Kathode zu einer Anode gebildet sein, woraus ein Kurzschluss resultiert.

Das thermische Durchgehen bezeichnet eine Überhitzung einer in dem Zellgehäuse 2 stattfindenden exothermen chemischen Reaktion, wobei sich die Schadstelle soweit erhitzt, dass sich eine unmittelbare Umgebung der Schadstelle ebenfalls erhitzt, wobei sich ein solcher Prozess ausweitet. Die im Vergleich hohe Wärmeenergie führt dabei zunächst zu einer Verdampfung eines Elektrolyts der Einzelzelle 1, wodurch zusätzlich Wärmeenergie und brennbare Gase G entstehen. Steigt der Innendruck über einen bestimmten Innendruck an, werden die brennbaren Gase G freigesetzt und in Kombination mit Luft entsteht ein zündfähiges Gemisch, so dass außerhalb des Zellgehäuses 2 Flammen entstehen. Dabei besteht die Gefahr, dass sich aufgrund der Wärmeenergie der thermisch durchgehenden Einzelzelle 1 und/oder der Flammen an der thermisch durchgehenden Einzelzelle 1 benachbarte Einzelzellen 1 so weit aufheizen, dass eine Kettenreaktion entsteht.

Um insbesondere eine thermische Propagation weitestgehend zu vermeiden, wenn eine Einzelzelle 1 eines elektrischen Energiespeichers thermisch durchgeht, weist die Einzelzelle 1 eine solche Entlüftungsöffnung E auf. Über diese Entlüftungsöffnung E können Gase G, die auch als Ventinggase bezeichnet werden, gezielt aus dem Zellgehäuse 2 austreten. Zur weitestmöglichen Sicherstellung, dass unter anderem ein Bereich unterhalb der Entlüftungsöffnung E des Zellgehäuses 2 freigehalten bleibt, um das Gas G über die Entlüftungsöffnung E gezielt aus dem Zellgehäuse 2 zu leiten, ist ein Gasführungsstrukturelement 4 in diesem Bereich angeordnet.

Dieses Gasführungsstrukturelement 4 ist aus einem Duroplast und/oder Polypropylen gebildet, so dass das Gasführungsstrukturelement 4 auch im Fall, dass die Einzelzelle 1 thermisch durchgeht und dadurch Wärmeenergie freigesetzt wird, seine Schutzgeometrie beibehält. Dabei sind Duroplaste, also Duromere, vergleichsweise hochtemperaturbeständige Kunststoffe.

Das Gasführungsstrukturelement 4 weist zwei Ebenen auf, die übereinander angeordnet sind und parallel zu der Gehäuseseite 2.1 des Zellgehäuses 2 verlaufen, in welche die Entlüftungsöffnung E integriert ist. Dabei ist das Gasführungsstrukturelement 4 an Fixierelementen 5 zur Fixierung des elektrochemisch aktiven Materials 3 und/oder an einer Innenfläche der Gehäuseseite 2.1 des Zellgehäuses 2 kraft- und/oder form- und/oder stoffschlüssig angeordnet.

Eine Ebene ist als Stützelement 4.1 ausgebildet und weist ein Mittelteil 4.1.1 auf, von dem in Richtung eines Seitenwandbereiches einer jeweiligen Flachseite des Zellgehäuses 2 eine Anzahl von Stegen 4.1.2 abragen.

Eine weitere Ebene des Gasführungsstrukturelementes 4 ist mittels eines Gasführungselementes 4.2 gebildet, welches einen Mittelsteg 4.2.1 sowie zwei gegenüberliegend angeordnete, parallel zu dem Mittelsteg 4.2.1 verlaufende, an gegenüberliegenden Seitenwandbereichen der Flachseiten des Zellgehäuses 2 anliegende Seitenstege 4.2.2 auf. Ein dem Mittelteil 4.1.1 gegenüberliegendes jeweiliges Ende der Stege 4.1.2 des Stützelementes 4.1 ist mit einem der zwei Seitenstege 4.2.2 des Gasführungselementes 4.2 verbunden, insbesondere stoffschlüssig. Dabei stellen der Mittelsteg 4.2.1 und die beiden Seitenstege 4.2.2 Längsführungen dar, um das Gas G aus einem Abschnitt des Stützelementes 4.1 zu der Entlüftungsöffnung E zu führen.

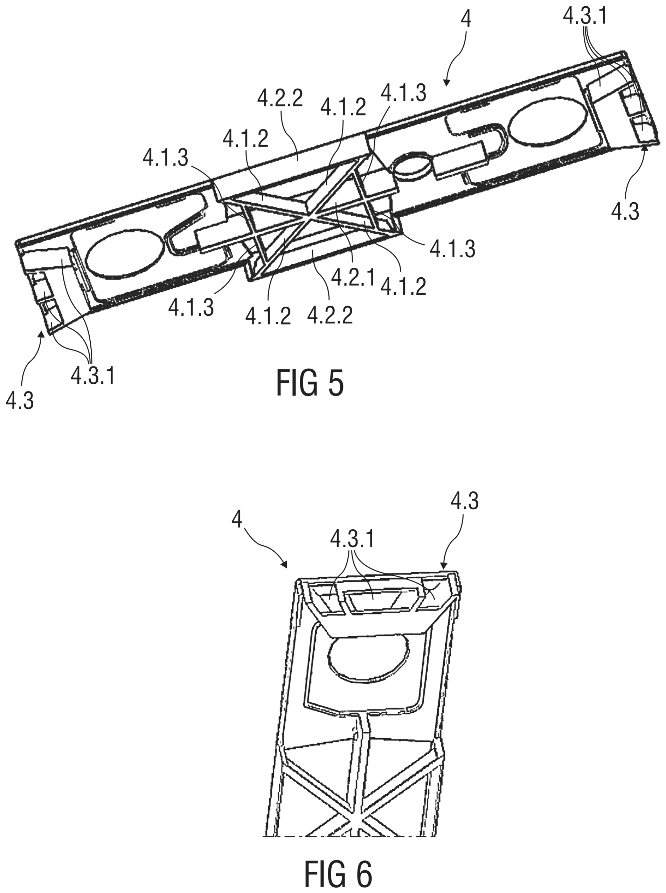

Ein jeweiliges Ende des Mittelsteges 4.2.1 des Gasführungselementes 4.2 ist mittels Abschnitten gebildet, die in einem vorgegebenen Winkel zueinander angeordnet sind. Die Enden des Mittelsteges 4.2.1 sind beispielsweise gespaltet ausgebildet, insbesondere ausgeformt. Auch kann vorgesehen sein, dass der Mittelsteg 4.2.1, wie in einer in den Figuren 4 und 5 gezeigten alternativen Ausführungsform des Gasführungsstrukturelementes 4 diese Abschnitte nicht aufweist, um die gerichtete Gasführung zu optimieren.

Das Stützelement 4.1 ist ausgebildet, um das elektrochemisch aktive Material 3, beispielsweise die Elektrodenfolienanordnung, im Fall eines thermischen Durchgehens der Einzelzelle 1 abzustützen, so dass eine Hochbewegung des elektrochemisch aktiven Materials 3 während des thermischen Durchgehens der Einzelzelle 1 gar nicht möglich oder zumindest begrenzt ist. Das elektrochemisch aktive Material 3 verbleibt also mittels des Stützelementes 4.1 weitestgehend in seiner mittels der Fixierelemente 5 vorgegebenen Position und kann somit die Entlüftungsöffnung E zur Entgasung des Zellgehäuses 2 nicht blockieren.

Darüber hinaus ist das Stützelement 4.1 ausgebildet, das Gas G seitlich aus einem Außenbereich des elektrochemisch aktiven Materials 3, insbesondere über Schmalseitenwandbereiche, in Richtung der Entlüftungsöffnung E zu führen. Beispielsweise erstreckt sich das Gasführungsstrukturelement 4 zur optimierten gezielten, insbesondere gerichteten, Gasführung von einem Schmalseitenwandbereich zu einem gegenüberliegenden Schmalseitenwandbereich des Zellgehäuses 2.

Mittels des Mittelsteges 4.2.1 des Gasführungselementes 4.2 wird eine Reduzierung einer Verwirbelung des Gases G bei seinem Austritt aus der Entlüftungsöffnung E erreicht, wobei der Mittelsteg 4.2.1 zusätzlich ein auf diesem angeordnetes Ventinggitter 6, insbesondere seitlich, stabil abstützt.

Die abschnittsweise an den Seitenwandbereichen der Flachseiten des Zellgehäuses 2 anliegenden Seitenstege 4.2.2 des Gasführungselementes 4.2 dienen ebenfalls, zumindest geringfügig, der Gasführung, wobei die Seitenstege 4.2.2, insbesondere nach außen, als Hitzeschutz dienen. Dabei erstrecken sich die Seitenstege 4.2.2 derart an den entsprechenden Seitenwandbereichen, dass mittels der Seitenstege 4.2.2 ein kritischer, insbesondere hitzeempfindlicher, Bereich einer benachbart angeordneten Einzelzelle 1 vor einer zu hohen Hitzeeinwirkung geschützt ist.

Mittels des Gasführungsstrukturelementes 4 ist das elektrochemisch aktive Material 3, insbesondere in seiner vorgesehenen Position fixiert. Mittels der verschiedenen Ausbildungen der beiden Ebenen des Gasführungsstrukturelementes 4 kann weitestgehend ausgeschlossen werden, dass die Entlüftungsöffnung E mit Fragmenten des elektrochemisch aktiven Materials 3 blockiert wird.

Zudem wird mittels des Gasführungsstrukturelementes 4 erreicht, dass das Gas G aktiv zur Entlüftungsöffnung E und gesteuert verwirbelungsarm nach außerhalb des Zellgehäuses 2 geführt wird.

Weiterhin ist der Entlüftungsbereich vergrößert, insbesondere dadurch, dass sich das Gasführungsstrukturelement 4 über einen Bereich von der Gehäuseseite 2.1 bis zu dem elektrochemisch aktiven Material 3 erstreckt, insbesondere in einem Bereich unterhalb der Entlüftungsöffnung E.

Darüber hinaus dienen die Seitenstege 4.2.2 des Gasführungselementes 4.2 als Hitzeschutz in einem relevanten oberen Bereich des Zellgehäuses 2, wobei die Seitenstege 4.2.2 direkt in einem Schweißbereich zur stoffschlüssigen Verbindung von Stromableiterfahnen des elektrochemisch aktiven Materials 3 mit an einem Zelldeckel angeordneten Polkontakten der Einzelzelle 1 angeordnet sein können.

Die Figuren 4 und 5 zeigen jeweils eine perspektivische Ansicht einer alternativen Ausführungsform des Gasführungsstrukturelementes 4.

In der alternativen Ausführungsform erstreckt sich das Gasführungsstrukturelement 4 von einer Schmalseite des Zellgehäuses 2 zu einer gegenüberliegenden Schmalseite, so dass das Gas G gezielt gelenkt, das elektrochemisch aktive Material umlaufend, über die Schmalseitenwandbereiche des Zellgehäuses 2 zu der Entlüftungsöffnung E geführt wird und das Gas G gezielt gerichtet aus der Entlüftungsöffnung strömt.

In der alternativen Ausführungsform des Gasführungsstrukturelementes 4 erstreckt sich der Mittelsteg 4.2.1 über beide Ebenen, wobei eine Anzahl der von dem Mittelsteg 4.2.1' in Richtung der Seitenstege 4.2.2 abragenden Stege 4.1.2 verringert ist. Zudem ist ein Verbindungssteg 4.1.3 zwischen dem Mittelsteg 4.2.1 und dem jeweiligen abragenden Steg 4.1.2 angeordnet, insbesondere ausgebildet.

Das in den Figuren 4 und 5 gezeigte Gasführungsstrukturelement 4 weist weitere Ausformungen und Öffnungen auf, um das Gas G gezielt zu der Entlüftungsöffnung E zu führen, um die Hitzeentwicklung innerhalb des Zellgehäuses 2 und einen Wärmeübergang auf benachbarte Einzelzellen 1 zu verringern. Insbesondere weist das Gasführungsstrukturelement 4 zumindest in seiner alternativen Ausführungsform in seinen Randbereichen in Richtung einer Längsachse seitlich beabstandet zu dem Stützelement 4.1 und dem Gasführungselement 4.2 jeweils ein Gasleitelement 4.3 zur Führung des Gases G in Richtung der Entlüftungsöffnung E auf.

Figur 6 zeigt eine perspektivische Ansicht eines Ausschnittes des Gasführungsstrukturelementes 4 im Bereich eines der beiden Gasleitelemente 4.3.

Insbesondere sollen die bei einem thermischen Durchgehen entstehenden Gase G, beispielsweise nach Erreichen von einem Innendruck von ungefähr 9 bar über die freigegebene Entlüftungsöffnung E des Zellgehäuses 2 entweichen.

Löst das thermische Ereignis in einem der Gehäuseseite 2.1 gegenüberliegenden Gehäuseabschnitt aus, müssen die Gase G von diesem Gehäuseabschnitt an eine Zelloberseite gelangen, insbesondere die Entlüftungsöffnung E erreichen. Dies kann durch Lagen des elektrochemisch aktiven Materials 3 und/oder seitlich entlang des elektrochemisch aktiven Materials 3 erfolgen.

Bei einer vollständig geladenen Einzelzelle 1 und/oder zellinternen Besonderheiten, beispielsweise gestapelten Einzelzellen 1 mit vergleichsweise hoher Packungsdichte, muss das Gas G seitlich an dem elektrochemisch aktiven Material 3 vorbeigeführt werden. Um zu ermöglichen, dass das Gas G seitlich an dem elektrochemisch aktiven Material 3 vorbei- und in Richtung der Entlüftungsöffnung E geführt wird, sind die Gasleitelemente 4.3 in den Randbereichen des Gasführungsstrukturelementes 4 angeordnet.

Das jeweilige Gasleitelement 4.3 weist zumindest zwei Leitstege 4.3.1, vorzugsweise jeweils ein Leitsteg 4.3.1 in einem Randbereich des Gasführungsstrukturelementes 4, auf, vorzugsweise vier Leitstege 4.3.1, vorzugsweise jeweils zwei Leitstege 4.3.1 in einem Randbereich des Gasführungsstrukturelementes 4, auf, zwischen denen jeweils ein Leitkanal zur gezielten Führung des Gases G ausgebildet ist. Insbesondere verjüngt sich das Gasleitelement 4.3 durch Ausbildung und Positionierung der Leitstege 4.3.1 in Richtung der Entlüftungsöffnung E, wodurch das Gas G gezielt in Richtung der Entlüftungsöffnung E geführt werden kann. Eine Anzahl von Leitstegen 4.3.1 in einem jeweiligen Randbereich des Gasführungsstrukturelementes 4 kann auch größer als zwei sein, beispielsweise drei oder vier.

Ein in einem dem elektrochemisch aktiven Material 3 zugewandten Bereich des Gasleitelementes 4.3 ist dieses abschnittsweise geschlossen, beispielsweise zur Abstützung des elektrochemisch aktiven Materials 3.

### Bezugszeichenliste

- 1: Einzelzelle
- 2: Zellgehäuse
- 2.1: Gehäuseseite
- 3: elektrochemisch aktives Material
- 4: Gasführungsstrukturelement
- 4.1: Stützelement
- 4.1.1: Mittelteil
- 4.1.2: Steg
- 4.1.3: Verbindungssteg
- 4.2: Gasführungselement
- 4.2.1: Mittelsteg
- 4.2.2: Seitensteg
- 4.3: Gasleitelement
- 4.3.1: Leitsteg
- 5: Fixierelement
- 6: Ventinggitter

- E: Entlüftungsöffnung
- G: Gas

## Patentansprüche

1. Elektrochemische Einzelzelle (1) mit einem Zellgehäuse (2), in welchem ein elektrochemisch aktives Material (3) angeordnet ist und das Zellgehäuse (2) eine mit einer Berstmembran verschlossene Entlüftungsöffnung (E) aufweist, wobei die Berstmembran die Entlüftungsöffnung (E) bei Überschreiten eines vorgegebenen Innendruckes in dem Zellgehäuse (2) zumindest teilweise freigibt,
**dadurch gekennzeichnet, dass** in einem Bereich unterhalb der Entlüftungsöffnung (E) innerhalb des Zellgehäuses (2) ein Gasführungsstrukturelement (4) zur gezielten Gasführung eines aus der Entlüftungsöffnung (E) austretenden Gases angeordnet ist.

2. Elektrochemische Einzelzelle (1) nach Anspruch 1,
**dadurch gekennzeichnet, dass** das Gasführungsstrukturelement (4) zwei Ebenen umfasst, die übereinander angeordnet sind und parallel zu einer Gehäuseseite (2.1) des Zellgehäuses (2.1), in welche die Entlüftungsöffnung (E) integriert ist, verlaufen.

3. Elektrochemische Einzelzelle (1) nach Anspruch 2,
**dadurch gekennzeichnet, dass** eine Ebene des Gasführungsstrukturelementes (4) als Stützelement (4.1) zum Fixieren und Abstützen des elektrochemisch aktiven Materials (3) innerhalb des Zellgehäuses (2) und zur Führung des Gases (G) von einem Seitenwandbereich des Zellgehäuses (2) in Richtung der Entlüftungsöffnung (E) ausgebildet ist.

4. Elektrochemische Einzelzelle nach Anspruch 3,
**dadurch gekennzeichnet, dass** das Stützelement (4.1) von einem Mittelteil (4.1.1) in Richtung der Seitenwandbereiche des Zellgehäuses (2) abragende Stege (4.1.2) aufweist, die mit einem dem Mittelteil (4.1.1) gegenüberliegenden Ende eines jeweiligen Seitensteges (4.2.2) einer als Gasführungselement (4.2) ausgebildeten weiteren Ebene des Gasführungsstrukturelementes (4) verbunden sind.

5. Elektrochemische Einzelzelle (1) nach Anspruch 4,
**dadurch gekennzeichnet, dass** das Gasführungselement (4.2) zur Führung des Gases (G) von dem Stützelement (4.1) zur Entlüftungsöffnung (E) ausgebildet ist.

6. Elektrochemische Einzelzelle (1) nach Anspruch 4 oder 5,
**dadurch gekennzeichnet, dass** das Gasführungselement (4.2) einen Mittelsteg (4.2.1) zur Verringerung von Gasverwirbelungen bei einem Gasaustritt aus der Entlüftungsöffnung (E) und zur Abstützung eines Ventinggitters (6) sowie zwei gegenüberliegend angeordnete, an gegenüberliegenden Seitenwandbereichen des Zellgehäuses (2) anliegende Seitenstege (4.2.2) zur Gasführung und als jeweils nach außen dienender Hitzeschutz aufweist.

7. Elektrochemische Einzelzelle (1) nach einem der vorhergehenden Ansprüche, **dadurch gekennzeichnet, dass** an dem Gasführungsstrukturelement (4) in zumindest einem Randbereich in Richtung einer Längsachse seitlich beabstandet zu dem Stützelement (4.1) und dem Gasführungselement (4.2) ein Gasleitelement (4.3) zur Führung des Gases (G) in Richtung der Entlüftungsöffnung (E) angeordnet oder ausgebildet ist.

8. Elektrochemische Einzelzelle (1) nach Anspruch 7,
**dadurch gekennzeichnet, dass** das Gasleitelement (4.3) eine Anzahl in Richtung der Entlüftungsöffnung (E) verlaufender Leitstege (4.3.1) aufweist.

9. Elektrochemische Einzelzelle (1) nach Anspruch 8,
**dadurch gekennzeichnet, dass** das Gasleitelement (4.3) vier Leitstege (4.3.1) und drei zwischen diesen ausgebildete Leitkanäle aufweist.

10. Elektrochemische Einzelzelle (1) nach Anspruch 8 oder 9,
**dadurch gekennzeichnet, dass** die Leitstege (4.3.1) derart positioniert sind, dass sich die Leitkanäle in Richtung der Entlüftungsöffnung (E) erstrecken.

11. Elektrochemische Einzelzelle (1) nach einem der Ansprüche 7 bis 10,
**dadurch gekennzeichnet, dass** das Gasleitelement (4.3) in einem dem elektrochemisch aktiven Material (3) zugewandten Bereich abschnittsweise geschlossen ist.

12. Elektrochemische Einzelzelle (1) nach einem der vorhergehenden Ansprüche, **dadurch gekennzeichnet, dass** das Gasführungsstrukturelement (4) aus einem Duroplast und/oder Polypropylen gebildet ist.

13. Elektrochemische Einzelzelle (1) nach einem der Ansprüche 2 bis 7,
**dadurch gekennzeichnet, dass** das Gasführungsstrukturelement (4) an Fixierelementen (5) zur Fixierung des elektrochemisch aktiven Materials und/oder an einer Innenfläche der Gehäuseseite (2.1) des Zellgehäuses (2) kraft- und/oder form- und/oder stoffschlüssig angeordnet ist.

14. Elektrochemische Einzelzelle (1) nach einem der vorhergehenden Ansprüche, **dadurch gekennzeichnet, dass** das Zellgehäuse (2) prismatisch ausgebildet ist.

15. Elektrischer Energiespeicher mit einer Mehrzahl von elektrisch miteinander verschalteten Einzelzellen (1), welche nach einem der vorhergehenden Ansprüche ausgebildet sind.
